# EUROPEAN PATENT APPLICATION

(11) **EP 4 675 690 A1**
(43) Date of publication of application: **07.01.2026**
(21) Application number: 24898045.0
(22) Date of filing: 25.11.2024
(51) Int. Cl.: H01M 4/04, B65H 43/04, B65H 23/26, B65H 23/032, B23K 26/38, B26F 1/12

(54) **ELECTRODE MANUFACTURING APPARATUS**

(30) Priority: 28.11.2023 KR 20230167378
(71) Applicant: LG Energy Solution, Ltd., Seoul 07335 (KR)
(72) Inventor: HAM, Hyeong Joo, Daejeon 34122 (KR)
(74) Representative: Plasseraud IP
(86) International application number: PCT/KR2024/018719
(87) International publication number: WO 2025/116450

(57) **Abstract**

The present technology provides an electrode manufacturing apparatus including a plurality of guide rollers arranged in a moving path of an electrode sheet, a plurality of cameras arranged at a plurality of detection positions corresponding to the plurality of guide rollers, a controller configured to detect a physical defect of the electrode sheet, based on a signal transmitted from the plurality of cameras, and a plurality of actuators configured to move the plurality of guide rollers in a width direction of the electrode sheet

## Description

### [Technical Field]

The present invention relates to an electrode manufacturing apparatus, and more particularly, to an electrode manufacturing apparatus for manufacturing electrodes of a secondary battery.

This application claims the benefit of priority based on Korean Patent Application No. 10-2023-0167378, filed on November 28, 2023, and the entire content of the Korean patent application is incorporated herein by reference.

### [Background Art]

With the development of technologies of mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof. Recently, as the field of application of secondary batteries expands, the demand for higher-capacity secondary batteries is increasing rapidly.

Generally, in order to manufacture a secondary battery, an electrode sheet is manufactured by coating a current collector with an electrode active material and a subsequent process is performed on the electrode sheet. When a defect occurs in the electrode sheet during the handling of the electrode sheet, the defect of the electrode sheet is removed and two separated parts of the electrode sheet are reconnected to perform a process on the electrode sheet.

### [Disclosure]

### [Technical Problem]

The present invention is directed to providing an electrode manufacturing apparatus.

### [Technical Solution]

An aspect of the present invention provides an electrode manufacturing apparatus including a plurality of guide rollers arranged in a moving path of an electrode sheet, a plurality of cameras arranged at a plurality of detection positions corresponding to the plurality of guide rollers, a controller configured to detect a physical defect of the electrode sheet, based on a signal transmitted from the plurality of cameras, and a plurality of actuators configured to move the plurality of guide rollers in a width direction of the electrode sheet.

In example embodiments, the electrode sheet may include a coated part and an uncoated part, and the controller may be configured to detect a physical defect of the uncoated part of the electrode sheet, based on the signal transmitted from the plurality of cameras.

In example embodiments, the controller may be configured to determine a target guide roller related to the physical defect of the electrode sheet among the plurality of guide rollers, based on the signal transmitted from the plurality of cameras.

In example embodiments, the controller may apply a control signal to a target actuator responsible for movement of the target guide roller among the plurality of actuators, and the target actuator may be configured to adjust a position of the target guide roller, based on the control signal from the controller.

In example embodiments, each of the plurality of guide rollers may include a central part with a flat surface, outer parts with an inclined surface, and stepped parts at boundaries between the central part and the outer parts, and the target actuator may be configured to adjust positions of the stepped parts of the target guide roller, based on the control signal from the controller.

In example embodiments, the target actuator may be configured to adjust the position of the target guide roller such that the electrode sheet is positioned within the central part of the target guide roller.

In example embodiments, the target actuator may be configured to adjust the position of the target guide roller to prevent the electrode sheet from overlapping the stepped parts of the target guide roller.

In example embodiments, the controller may determine as the target guide roller a guide roller closest to a start point of the physical defect of the electrode sheet among the plurality of guide rollers.

In example embodiments, each of the plurality of actuators may be configured to move a corresponding guide roller among the plurality of guide rollers, based on a signal from the controller.

In example embodiments, the electrode sheet may include a coated part and an uncoated part, and the electrode manufacturing apparatus may further include a notching device configured to remove a part of the uncoated part of the electrode sheet.

In example embodiments, the electrode manufacturing apparatus may further include an unwinder around which the electrode sheet is wound and a rewinder configured to recover and wind the electrode sheet, and the plurality of guide rollers may be provided between the unwinder and the rewinder.

### [Advantageous Effects]

According to example embodiments of the present invention, the occurrence of a physical defect of an electrode sheet can be quickly detected by a plurality of cameras at a plurality of detection positions to minimize an amount of the electrode sheet to be discarded due to the physical defect of the electrode sheet, thereby increasing the productivity of an electrode manufacturing apparatus.

Furthermore, according to example embodiments of the present invention, the physical defect of the electrode sheet can be detected by the plurality of cameras and a position of a guide roller related to the physical defect can be automatically adjusted based on a result of detecting the physical defect to reduce a setting adjustment time of equipment due to the occurrence of the physical defect of the electrode sheet, thereby increasing the productivity of the electrode manufacturing apparatus.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a side view of an electrode manufacturing apparatus according to example embodiments of the present invention.
FIG. 2 is a plan view of an electrode manufacturing apparatus according to example embodiments of the present invention.
FIG. 3 is a perspective view of a guide roller of an electrode manufacturing apparatus according to example embodiments of the present invention.
FIGS. 4a and 4b are plan views illustrating an electrode manufacturing method of an electrode manufacturing apparatus according to example embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

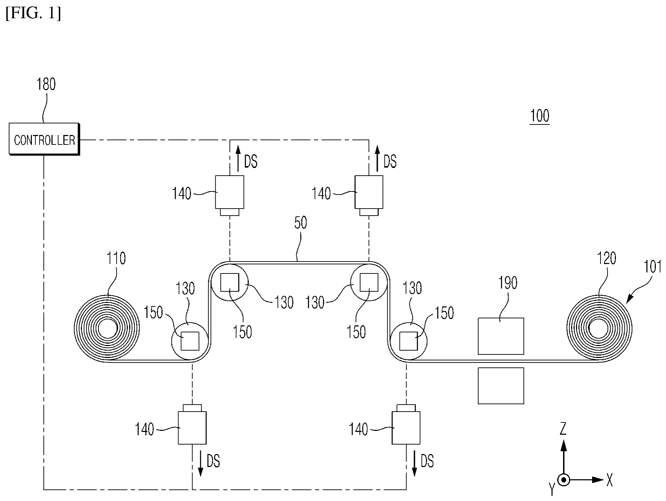

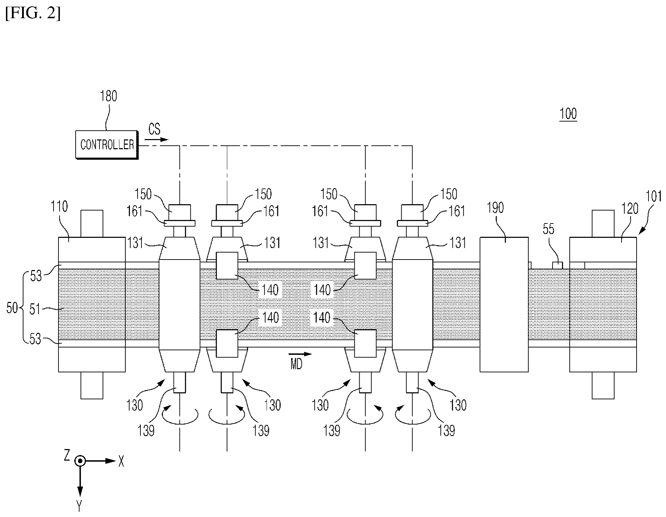

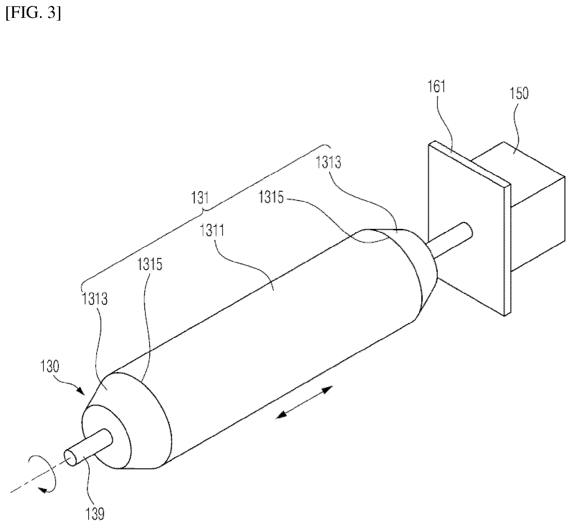

FIG. 1 is a side view of an electrode manufacturing apparatus 100 according to example embodiments of the present invention. FIG. 2 is a plan view of the electrode manufacturing apparatus 100 according to example embodiments of the present invention. FIG. 3 is a perspective view of a guide roller 130 of the electrode manufacturing apparatus 100 according to example embodiments of the present invention.

Referring to FIGS. 1 to 3, the electrode manufacturing apparatus 100 may be configured to move an electrode sheet 50 along a predetermined moving path and perform an electrode manufacturing process on the electrode sheet 50. The electrode manufacturing process may include a coating process, a rolling process, a slitting process, a notching process, etc.

The electrode sheet 50 may include a substrate, and an electrode slurry layer applied to at least one of opposite surfaces of the substrate. The substrate may be a current collector including, for example, copper or aluminum. The electrode slurry layer may include a positive electrode active material or a negative electrode active material.

The electrode sheet 50 may include a coated part 51 coated with the electrode slurry layer, and an uncoated part 53 that is not coated with the electrode slurry layer. In the coated part 51 of the electrode sheet 50, a surface of the substrate may be covered with the electrode slurry layer not to be exposed to the outside. In the uncoated part 53 of the electrode sheet 50, the surface of the substrate may be exposed. For example, the uncoated part 53 of the electrode sheet 50 may be at opposite edges of the electrode sheet 50 in a width direction of the electrode sheet 50. The width direction of the electrode sheet 50 may be perpendicular to a machine direction MD of the electrode sheet 50. For example, when the machine direction MD of the electrode sheet 50 is parallel to an X-axis direction, the width direction of the electrode sheet 50 may be parallel to a Y-axis direction.

The electrode manufacturing apparatus 100 may include a roll-to-roll device 101 configured to move the electrode sheet 50 along a predetermined path. The roll-to-roll device 101 may include an unwinder 110, a rewinder 120, a plurality of guide rollers 130, a plurality of actuators 150, a plurality of cameras 140, and a controller 180.

The electrode sheet 50 may extend between the unwinder 110 and the rewinder 120 and be moved between the unwinder 110 and the rewinder 120. The electrode sheet 50 may be provided while being wound around the unwinder 110. The electrode sheet 50 supplied from the unwinder 110 may be moved along a predetermined moving path and recovered by the rewinder 120. The rewinder 120 may rotate to wind the electrode sheet 50. The rewinder 120 may rotate in synchronization with the rotation of the unwinder 110. The rewinder 120 and the unwinder 110 may be each connected to a driving motor and configured to rotate about a rotation shaft 139 by a driving force provided by the driving motor.

The plurality of guide rolls 130 may be provided in the moving path of the electrode sheet 50 between the rewinder 120 and the unwinder 110. The plurality of guide rolls 130 may guide the electrode sheet ES to be moved along the predetermined moving path. Each of the guide rollers 130 may be an idle roller or a drive roller. FIGS. 1 and 2 illustrate that four guide rollers 130 are provided between the unwinder 110 and the rewinder 120, but the present invention is not limited thereto and the roll-to-roll device 101 may include several to dozens of guide rollers 130 to move the electrode sheet 50 in the predetermined moving path.

Each of the guide rollers 130 may include a rotation shaft 139 and a rotation body 131 mounted on the rotation shaft 139. The rotation shaft 139 may be mounted on a frame 161. The rotation body 131 may rotate about the rotating shaft 139 and provide a surface supporting the electrode sheet 50 and contacting the electrode sheet 50. The rotation body 131 may be configured to rotate based on the width direction of the electrode sheet 50 perpendicular to the machine direction MD of the electrode sheet 50.

The rotation body 131 may include a central part 1311 and a pair of outer parts 1313 in the width direction of the electrode sheet 50. The central part 1311 of the rotation body 131 may have a generally uniform thickness and a flat surface supporting the electrode sheet 50. The outer parts 1313 of the rotation body 131 may have a tapered shape, the thickness of which decreases as a distance from the central part 1311 of the rotation body 131 increases. The outer parts 1313 of the rotation body 131 may include an inclined surface inclined with respect to the flat surface of the central part 1311 of the electrode sheet 50. A stepped part 1315 may be provided between the central part 1311 and the outer parts 1313 of the rotation body 131.

The plurality of actuators 150 may move the plurality of guide rollers 130 in the width direction of the electrode sheet 50 and adjust positions of the plurality of guide rollers 130 in the width direction of the electrode sheet 50. Hereinafter, the position of the guide roller 130 in the width direction of the electrode sheet 50 will be simply referred to as the position of the guide roller 130. Each of the actuators 150 may linearly move a corresponding guide roller 130 among the plurality of guide rollers 130 to adjust a position of the corresponding guide roller 130. Each of the actuators 150 may linearly move the rotation shaft 139 and the rotation body 131 of the corresponding guide roller 130 together. In example embodiments, each of the actuators 150 may linearly move the corresponding guide roller 130 along the width direction of the electrode sheet 50 or a direction in which the rotation shaft 139 extends so that the stepped part 1315 of the rotation body 131 of the corresponding guide roller 130 may be located at a designated position.

The plurality of cameras 140 may photograph the electrode sheet 50 at a plurality of detection positions on the electrode sheet 50 to detect physical defects of the electrode sheet 50 guided and moved by the plurality of guide rollers 130. The plurality of cameras 140 may include at least one camera 140 for photographing one detection position on the electrode sheet 50. The plurality of cameras 140 may include at least one imaging device configured to capture an image of the electrode sheet 50. Each of the plurality of cameras 140 may transmit images obtained by photographing the electrode sheet 50 to the controller 180. The plurality of cameras 140 may be provided at a plurality of detection positions corresponding to the positions of the plurality of guide rollers 130. Each of the cameras 140 may be provided near a corresponding guide roller 130 among the plurality of guide rollers 130, and configured to photograph a part of the electrode sheet 50 near the corresponding guide roller 130. In example embodiments, each of the cameras 140 may be configured to photograph the uncoated part 53 of the electrode sheet 50 to detect a physical defect of the uncoated part 53 of the electrode sheet 50. The physical defect of the uncoated part 53 of the electrode sheet 50 may include apparently identifiable defects such as wrinkles, indentations, and cracks.

The controller 180 may control overall operations of the roll-to-roll device 101, based on a signal DS transmitted from the plurality of cameras 140. The controller 180 may generate a control signal CS for controlling positions of the plurality of guide rollers 130 in a lateral direction of the electrode sheet 50 based on the signal DS transmitted from the plurality of cameras 140, and supply the generated control signal CS to the plurality of actuators 150. The controller 180 may include at least one memory device configured to store data and at least one processor configured to process data. For example, the controller 180 may be implemented as a computer, a programmable logic controller (PLC) or the like.

The plurality of cameras 140 may obtain images of the electrode sheet 50 at the plurality of detection points corresponding to the positions of the plurality of guide rollers 130, and the controller 180 may determine whether a physical defect has occurred in the electrode sheet 50 based on the images of the electrode sheet 50 that are obtained at the plurality of detection points. When it is determined that a physical defect has occurred in the electrode sheet 50, the controller 180 may determine a guide roller 130 related to the physical defect occurring in the electrode sheet 50 among the plurality of guide rollers 130, based on the images of the electrode sheet 50 obtained at the plurality of detection points. Hereinafter, the guide roller 130 determined to be related to the physical defect occurring in the electrode sheet 50 will be referred to as a target guide roller.

When the target guide roller is determined, the controller 180 may apply the control signal CS to the target actuator responsible for moving the target guide roller among the plurality of actuators 150, and the target actuator may move the target guide roller in the width direction of the electrode sheet 50 according to the control signal CS applied by the controller 180.

In example embodiments, the controller 180 may detect the occurrence of a physical defect in the uncoated part 53 of the electrode sheet 50 based on the images of the electrode sheet 50 obtained at the plurality of detection points, and determine a target guide roller related to the occurrence of the physical defect in the uncoated part 53 of the electrode sheet 50. For example, when continuous or discontinuous physical defects are detected in the uncoated part 53 of the electrode sheet 50 along the machine direction MD of the electrode sheet 50, a guide roller 130 closest to a starting point of the physical defects may be determined as a target guide roller.

In example embodiments, the target actuator may move the target guide roller such that the electrode sheet 50 is positioned within the central part of the rotation body of the target guide roller, in response to the control signal CS from the controller 180. Alternatively, the target actuator may move the target guide roller such that the electrode sheet 50 does not overlap with an outer part of the target guide roller, in response to the control signal CS from the controller 180.

In example embodiments, the target actuator may adjust a position of the stepped part of the target guide roller in the width direction of the electrode sheet 50, based on the control signal CS from the controller 180. For example, when the electrode sheet 50 overlaps the stepped part of the target guide roller, the target actuator may move the target guide roller such that the electrode sheet 50 does not overlap the stepped portion of the target guide roller, based on the control signal CS from the controller 180.

The electrode manufacturing apparatus 100 may include a notching device 190 in a moving path of the electrode sheet 50. The notching device 190 may remove a part of the uncoated part 53 of the electrode sheet 50 to form an electrode tab 55 on the uncoated part 53 of the electrode sheet 50. The notching device 190 may include a laser notching device configured to remove a part of the uncoated part 53 of the electrode sheet 50 using a laser beam or a press-based notching device configured to remove a part of the uncoated part 53 of the electrode sheet 50 using a mold cutter.

### (Second Embodiment)

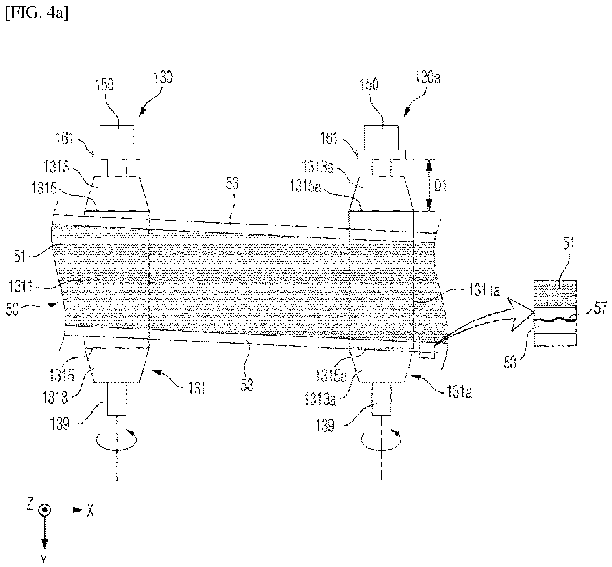

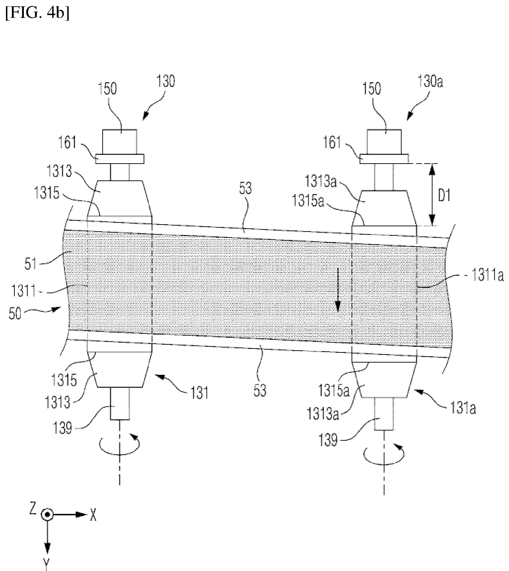

FIGS. 4a and 4b are plan views illustrating an electrode manufacturing method of the electrode manufacturing apparatus 100 according to example embodiments of the present invention. Hereinafter, the electrode manufacturing method of the electrode manufacturing apparatus 100 will be described with reference to FIGS. 4a and 4b together with FIGS. 1 to 3.

Referring to FIGS. 1 to 3 and 4a, the controller 180 may detect a physical defect 57 of the uncoated part 53 of the electrode sheet 50, based on a signal DS transmitted from the plurality of cameras 140. The physical defect 57 of the uncoated part 53 may be an indentation defect. While the electrode sheet 50 is in contact with the central part 1311 of the rotation body 131 of the guide roller 130 at an upstream side of the machine direction MD of the electrode sheet 50, the indentation defect may occur on the uncoated part 53 of the electrode sheet 50, starting from the guide roller 130 at a downstream side of the machine direction MD of the electrode sheet 50, when the uncoated part 53 of the electrode sheet 50 spans both the central part 1311 and the outer part 1313 of the rotation body 130 at the downstream side.

As shown in FIG. 4a, when the physical defect 57 is detected in the uncoated part 53 of the electrode sheet 50, the controller 180 may specify a target guide roller 130a related to the physical defect 57 of the uncoated part 53 of the electrode sheet 50 among the plurality of actuators 150, based on the signal DS transmitted from the plurality of cameras 140. The target guide roller 130a may be closest to a start point of the indentation defect among the plurality of guide rollers 130.

Referring to FIG. 4b, the controller 180 may adjust a position of the target guide roller 130a by applying the control signal CS to a target actuator 150a responsible for the movement of the target guide roller 130a among the plurality of actuators 150. The position of the target guide roller 130a may be adjusted so that the physical defect 57 of the electrode sheet 50, caused by the target guide roller 130a, is removed. In example embodiments, the position adjustment of the target guide roller 130a by the target actuator 150a may be performed while the movement of the electrode sheet 50 is stopped by the roll-to-roll device 101. In example embodiments, the position adjustment of the target guide roller 130a by the target actuator 150a may be performed in parallel with the movement of the electrode sheet 50 in the machine direction MD by the roll-to-roll device 101.

In example embodiments, the controller 180 may calculate a position movement value of the target guide roller 130a based on the signal DS transmitted from the plurality of cameras 140, and the target actuator 150a may move the target guide roller 130a in the width direction of the electrode sheet 50 by a determined position movement value based on the control signal CS applied from the controller 180.

In example embodiments, the target actuator 150a may move the target guide roller 130a such that the electrode sheet 50 overlaps a central part 1311a of a rotation body 131a of the target guide roller 130a but does not overlap an outer parts 1313a of the rotation body 131a, based on the control signal CS from the controller 180. In example embodiments, the target actuator 150a may move the target guide roller 130a such that the electrode sheet 50 does not overlap stepped parts 1315a of the rotation body 131a of the target guide roller 130a, based on the control signal CS from the controller 180. In example embodiments, the target actuator 150a may adjust a distance D1 between the frame 161 and one stepped part 1315a of the target guide roller 130a, based on the control signal CS from the controller 180.

In general, when a physical defect occurs in an electrode sheet, an electrode manufacturing process is performed by stopping an operation of manufacturing equipment, resetting the manufacturing equipment to remove the cause of the physical defect of the electrode sheet, cutting and removing a part of the electrode sheet on which the physical defect has occurred, reconnecting two separated parts of the electrode sheet with a tape, and resuming the operation of the manufacturing equipment. Because the part of the electrode sheet on which the physical defect has occurred is discarded, the productivity of the electrode sheet may decrease when the detection of the physical defect of the electrode sheet is delayed. In the case of a general electrode manufacturing process, it takes a long time to resume a manufacturing process, thus resulting in a decrease of an utilization rate of the equipment.

According to example embodiments of the present invention, the occurrence of the physical defect 57 of the electrode sheet 50 can be quickly detected by the plurality of cameras 140 at the plurality of detection positions to minimize an amount of the electrode sheet 50 to be discarded due to the physical defect 57 of the electrode sheet 50, thereby increasing the productivity of the electrode manufacturing apparatus 100.

In addition, according to example embodiments of the present invention, the physical defect 57 of the electrode sheet 50 can be detected by the plurality of cameras 140 and a position of the guide roller 130 related to the physical defect 57 can be automatically adjusted based on a result of detecting the physical defect 57 to reduce a setting adjustment time of the equipment due to the occurrence of the physical defect 57 of the electrode sheet 50, thereby increasing the productivity of the electrode manufacturing apparatus 100.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. An electrode manufacturing apparatus comprising:
a plurality of guide rollers arranged in a moving path of an electrode sheet;
a plurality of cameras arranged at a plurality of detection positions corresponding to the plurality of guide rollers;
a controller configured to detect a physical defect of the electrode sheet, based on a signal transmitted from the plurality of cameras; and
a plurality of actuators configured to move the plurality of guide rollers in a width direction of the electrode sheet.

2. The electrode manufacturing apparatus of claim 1, wherein
the electrode sheet comprises a coated part and an uncoated part, and
the controller is configured to detect a physical defect of the uncoated part of the electrode sheet, based on the signal transmitted from the plurality of cameras.

3. The electrode manufacturing apparatus of claim 2, wherein
the controller is configured to determine a target guide roller related to the physical defect of the electrode sheet among the plurality of guide rollers, based on the signal transmitted from the plurality of cameras.

4. The electrode manufacturing apparatus of claim 3, wherein
the controller applies a control signal to a target actuator responsible for movement of the target guide roller among the plurality of actuators, and
the target actuator is configured to adjust a position of the target guide roller, based on the control signal from the controller.

5. The electrode manufacturing apparatus of claim 4, wherein
each of the plurality of guide rollers comprises a central part with a flat surface, outer parts with an inclined surface, and stepped parts at boundaries between the central part and the outer parts, and
the target actuator is configured to adjust positions of the stepped parts of the target guide roller, based on the control signal from the controller.

6. The electrode manufacturing apparatus of claim 5, wherein
the target actuator is configured to adjust the position of the target guide roller such that the electrode sheet is positioned within the central part of the target guide roller.

7. The electrode manufacturing apparatus of claim 5, wherein
the target actuator is configured to adjust the position of the target guide roller to prevent the electrode sheet from overlapping the stepped parts of the target guide roller.

8. The electrode manufacturing apparatus of claim 3, wherein
the controller determines as the target guide roller a guide roller closest to a start point of the physical defect of the electrode sheet among the plurality of guide rollers.

9. The electrode manufacturing apparatus of claim 1, wherein
each of the plurality of actuators is configured to move a corresponding guide roller among the plurality of guide rollers, based on a signal from the controller.

10. The electrode manufacturing apparatus of claim 1, wherein
the electrode sheet comprises a coated part and an uncoated part, and
the electrode manufacturing apparatus further comprises a notching device configured to remove a part of the uncoated part of the electrode sheet.

11. The electrode manufacturing apparatus of claim 1, further comprising:
an unwinder around which the electrode sheet is wound; and
a rewinder configured to recover and wind the electrode sheet,
wherein the plurality of guide rollers are provided between the unwinder and the rewinder.
